# NEUE EUROPÄISCHE PATENTSCHRIFT

(11) **EP 0 594 213 B2**
(45) Veröffentlichungstag und Bekanntmachung des Hinweises auf die Entscheidung über den Einspruch: **03.11.1999**
(45) Hinweis auf die Patenterteilung: 12.03.1997
(21) Anmeldenummer: 93117186.2
(22) Anmeldetag: 22.10.1993
(51) Int. Cl.: B01D 46/00, B01D 46/42

(54) **Filtergerät für ein gasförmiges Medium**
Filtering device for a gaseous medium
Installation de filtrage pour un milieu gazeux

(30) Priorität: 22.10.1992 DE 4235700
(43) Veröffentlichungstag der Anmeldung: 27.04.1994
(73) Patentinhaber: KALTENBACH & VOIGT GMBH & CO., 88400 Biberach (DE)
(72) Erfinder: Buchmann, Siegfried, D-88319 Aitrach (DE); Lott, Manfred, D-88299 Leutkirch (DE)
(74) Vertreter: Schmidt-Evers, Jürgen, Dipl.-Ing.

(56) Entgegenhaltungen:
- EP-A- 0 169 330
- DE-A- 3 340 161
- DE-C- 3 900 083
- DE-U- 8 608 496
- GB-A- 449 104
- US-A- 3 895 929

## Beschreibung

Die Erfindung bezieht sich auf ein Filtergerät nach dem Oberbegriff des Anspruchs 1.

Bei einem Filtergerät bedarf es in gewissen Zeitabständen der Entfernung des gefilterten Filtergutes. Bei einem bekannten Filtergerät, das einem zahntechnischen Arbeitstisch zugeordnet ist, erfolgt dies dadurch, daß der Filter mit dem daran anhaftenden Filtergut entlernt wird. Hierzu ist eine den Filter aufnehmende Schublade im Arbeitstisch zu öffnen und der Filter mit dem daran anhaftenden Filtergut zu entfernen.

Eine solche Maßnahme ist mit einem Handhabungs- und Zeitaufwand verbunden, der zu hohen Betriebskosten führt, wobei außerdem die Kosten für die Filter zuzurechnen sind, weil bei dem bekannten Filtergerät eine Reinigung des Filters nicht möglich ist und deshalb der Filter ausgetauscht werden muß.

Ein weiterer Nachteil des bekannten Filtergerätes besteht darin, daß das Sammelelment für das Filtergut der Filter selbst ist, Hierdurch ist die Aufnahmekapazität für das Filtergut sehr begrenzt, so daß in verhältnismäßig geringen Zeitabständen das Filtergut entfernt werden muß, hier der Filter ausgetauscht werden muß.

In der US-A-3 931 016 ist ein Filtergerät der eingangs angegebenen Art mit einem in seinem oberen Bereich angeordneten Filter beschrieben, Es handelt sich bei diesem Filter um einen zylindrischen Drehfilter der während des Filterns gedreht wird, wobei das zu filternde gasförmige Medium zunächst radial einwärts und dann achsparallel nach oben durch den Filter strömt und die abgefilterten Partikel aufgrund der Rotation des Filters abgeschleudert und in einen darunter befindlichen Sammelbehälter fallen sollen. Der Sammelbehäler ist durch das Unterteil des zweiteiligen Gehäuses des Filtergerätes gebildet. Es ist offenbar auch keine Kupplungsvorrichtung zwischen dem Gehäuseoberteil und dem den Sammelbehälter bildenden Gehäuseunterteil vorgesehen. Es ist davon auszugehen, daß das Gehäuseoberteil durch Eigengewicht auf dem Sammelbehälter aufliegt.

Bei diesem bekannten Filtergerät ist die Entsorgung des im Sammelbehälter befindlichen Filterguts verbesserungsbedürftig. Auf welche Weise der Sammelbehälter gelöst, entfernt und nach der Entsorgung wieder montiert werden kann, ist nicht beschrieben. Außerdem besteht die Gefahr, daß nach Demontage des Sammelbehälters aus dem nach unten offenen Gehäuse Filtergut herausfallen kann, wodurch die Umgebung verschmutzt oder umweltschädlich beeinträchtigt werden kann, wenn es sich um umweltschädliche Partikel handelt, wie es insbesondere bei einem Filtergerät für einen zahnärztlichen Behandlungsplatz der Fall ist, bei dem umweltschädliche Stäube wie Kunststoff- und Schwermetallstaub anfallen.

Der Erfindung liegt die Aufgabe zugrunde, ein Filtergerät der eingangs beschriebenen Art so auszugestalten, daß eine einfachere und bessere Entsorgung des Filterguts erreicht wird.

Diese Aufgabe wird durch die Merkmale des neuen Anspruchs 1 gelöst.

Beim erfindungsgemäßen Filtergerät kommt vorzugsweise ein Filter zum Einsatz, der selbsttätig oder durch geeignete Maßnahmen vom Filtergut zu reinigen ist, so daß der Filter wiederverwendbar ist. Ein solches Reinigen des Filters kann durch Schütteln, Klopfen, pneumatische Filterspülung oder unmittelbar auf die Filteroberfläche einwirkende mechanische Beanspruchung wie Schaben, Abstreifen oder dgl. erfolgen. Eine solche Reinigung erfolgt in der Arbeitsposition des Filters, d.h. im Filtergerät. Die Halterung des Filters und das Filtergerät selbst sind entsprechend auszugestalten, so daß die vorhandenen Reinigungsmaßnahmen an Ort und Stelle durchgeführt werden können. Dabei ist auch die Zugänglichkeit zum Filter z.B. durch eine verschließbare Öffnung im vorhandenen Gehäuse zu gewährleisten.

Beim erfindungsgemäßen Filtergerät ist unterhalb des Filters in einem besonderen Filtergehäuse ein Sammelbehälter für das Filtergut vorgesehen, der von außen zugänglich ist, Das abgereinigte Filtergut fällt selbsttätig in den Sammelbehälter. Dieser kann verhältnismäßig groß ausgelegt werden, so daß die Aufnahmekapazität entsprechend groß ist und deshalb eine Entfernung des Filtergutes in größeren Zeitabständen erfolgen kann, nämlich dann, wenn der Sammelbehälter voll ist. Die Reinigung des Filters kann dagegen in kürzeren Zeitabständen erfolgen. Die Entfernung des Filtergutes ist durch die Zugänglichkeit des Sammelbehälters von außen gewährleistet.

Das erfindungsgemäße Filtergerät zeichnet sich durch eine einfache, kompakte, praktische und kostengünstig herstellbare Bauweise aus, die einen handhabungsfreundlichen Zugang nicht nur zum Sammlhehälter sondern gegebenenfalls auch zum Filter ermöglicht, so daß sowohl die Reinigung des Filters als auch die Entfernung des Filtergutes handhabungsfreundlich und schnell durchgeführt werden können.

Beim erfindungsgemäßen Filtergerät ist eine einfache, handhabungsfreundliche und sichere Entsorgung des Filterguts dadurch möglich, daß der Sammelbehälter mittels der Kupplungsvorrichtung vom Filtergehäuse gelöst, durch die Gehäuseoffnung entfernt und wieder montiert und dicht verschlossen werden kann. Sofern bei einer solchen Entsorgung Filtergut aus dem oberen Bereich des Filtergehäuses herausfällen sollte, fällt das Filtergut in den unteren Bereich des Gerätegehäuses und gelangt zunächst noch nicht in die Umgebung des Gerätes, so daß eine Beeinträchtigung der Umgebung unterbleibt. Aufgrund des erfindungsgemäßen Angriffs der Kupplungsvorrichtung am Sammelbehälter ist eine einfache Kupplungsvorrichtung vorgegeben, die sich mit geringem Aufwand in die Konstruktion integrieren läßt.

In der EP 0 169 330 B1 ist ein Filtergerät beschrieben, das ebenfalls von der gattungsgemäßen Art ist und ein Gehäuse und ein im Gehäuse angeordnetes Filtergehäuse aufweist, in dem ein Mantelfilter um eine horizontale Drehachse drehbar gelagert und durch einen Antrieb drehbar ist. Im Funktionsbetrieb durchströmt ein das Filtergut enthaltender Luftstrom den Mantelfilter von außen nach innen, und er gelangt dann axial zu einer Saugvorrichtung, die den gefilterten Luftstrom an die Umgebung abgibt. Das Filtervorrichtungsgehäuse ist durch ein tunnelförmiges Bauteil gebildet, das im Gehäuse angeordnet ist und unterseitig offen ist. Der Boden des Filtervorrichtungsgehäuses ist durch einen nach unten konisch verjüngten Auslaßtrichter gebildet, an den sich ein nach unter erstreckender Auslaßstutzen anschließt, der der lösbaren Ankopplung eines Sammelbehälters dient. Im Bereich des Stutzens ist ein kegelförmiges Verschlußelement angeordnet, das an einer Feder aufgehängt ist. Das Gewicht des Verschlußelements und die Kraft der Feder sind so aufeinander abgestimmt, daß ein sich im Filterbetrieb einstellender Unterdruck im Filtervorrichtungsgehäuse das Verschlußelement selbsttätig hebt und somit die Auslaßöffnung schließt. Beim Stillstand des Filtergerätes sinkt das Verschlußelement selbsstätig nach unten, wodurch der Auslaß in Form eines Ringspaltes selbsttätig geöffnet wird.

Aus der DE 86 08 496 U1 ist ein Filtergerät mit einem Gehäuse zu entnehmen, in dessen oberem Bereich ein Mantelfilter mit aufrecht stehender Umfangswand direkt im Gehäuse mit einem Ringabsfand von der Umfangswand des Gehäuses angeordnet ist. Unterhalb dieses Filterraumes ist ein sich konisch verjüngender Schmutzsammeltrichter angeordnet, der sich zu einem Auslaßstutzen hin erstreckt, an den ein Staubsack lösbar angeschlossen ist. Im Zentrum des Schmutzsammeltrichters ist ein Gebläse angeordnet, das im Funktionsbetrieb die zu filternde Luft in den den Mantelfilter umgebenden Ringraum im Gehäuse einsaugt und dann radial einwärts durch den Mantelfilter saugt und durch ein radiales Abströmrohr in einen den Schmutzsammeltrichter umgebenden Ringraum des Gehäuses fördert, aus dem die Luft in die Umgebung zu entweichen vermag. Der Staubsack befindet sich im unteren Bereich des Gehäuses, das aus einem Bodenteil und einem die Umfangswand des Gehäuses aufweisenden Oberteil besteht, die durch eine Teleskop-Feder-Anordnung miteinander verbunden sind. Wenn die gespannte Teleskop-Feder-Anordnung entriegelt wird, dann hebt sich das Oberteil mit der Gehäuse-Umfangswand mit allen daran befestigten Teilen vom Gehäuseboden nach oben ab. Dadurch wird unten im Gehäuse der Sammelbehälter frei, und er kann entleert oder ausgetauscht werden.

Aus der US-A-3 895 929 ist ein Filtergerät beschrieben, dessen Gehäuse durch einen sogenannten Zyklon gebildet ist, der einen sich nach unten erstreckenden Auslaßrichter aufweist, dessen unterer Endabschnitt von einem hohlzylindrischen Stutzen umgeben ist, auf den ein Staubsack zwecks Anschluß an den Auslaßtrichter lösbar aufschiebbar und befestigbar ist. Der Auslaßstutzen und der darauf aufgeschobene Abschnitt des Staubsacks sind von einem hohlzylindrischen Kragen umgeben, der sich vom zylindrischen Abschnitt des Zyklons nach unten erstreckt. Oberhalb des Zyklons sind eine Mehrzahl sich nach oben erstreckender Filterstrümpfe angeordnet, aus denen der mit Überdruck in den Zyklon eingeführte Luftstrom gefiltert entweicht.

Im weiteren ermöglicht die erfindungsgemäße Ausgestaltung auch ein abgedichtetes Sammeln und auch Entfernen des Filtergutes, was insbesondere bei einem umweltschädlichen Filtergut von Bedeutung ist, wie es in der zahnärztlichen Technik anfällt. Das erfindungsgemäße Filtergerät eignet sich deshalb insbesondere für den Bereich der zahnärztlichen Technik und vorzugsweise für einen zahntechnischen Arbeitsplatz. Dabei kann das Filtergerät jeweils einem vorhandenen Arbeitsplatz zugeordnet sein, oder es kann sich auch um ein Sammelfiltergerät handeln, das durch Zuführungsleitungen mit mehreren Arbeitsplätzen verbunden ist. Dabei kann das Filtergerät im vorhandenen Arbeitsraum oder auch außerhalb des den Arbeitsraum enthaltenen Gebäudes angeordnet sein, oder es kann auch eine Abführungsrohrleitung vorgesehen sein, die nach außen führt.

Bei dem erfindungsgemäßen Filtergerät gemäß Anspruch 15 ist der zwischen dem Gehäuse und dem Sammelbehälter wirksamen Anschlußeinrichtung ein Verschlußteil zugeordnet, mit dem die Öffnung des Oberteils des Gehäuses verschließbar ist und somit der ein Unterteil des Gehäuses bildende Sammelbehälter entfernbat ist, ohne daß Filtergut aus dem Gehäuse herausfallen kann. Hierdurch wird eine Verschmutzung oder Umweltschädigung des Gehäuses des Filtergerätes und der Umgebung des Filtergerätes vermieden.

In den weiteren Unteransprüchen sind Merkmale enthalten, die zur Problemlösung beitragen, die Bedienung bzw. Handhabungsfreundlichkeit verbessern, die Entsorgung erleichtern und verbessern, dabei das Entweichen des Filterguts in die Umgebung verhindern und den Zugang zum Sammelbereich und gegebenenfalls auch zum Filterbereich verbessern.

Nachfolgend werden die Erfindung und weitere durch sie erzielbare Vorteile anhand einer Zeichnung und bevorzugter Ausführungsbeispiele näher erläutert. Es zeigt
- Fig. 1: ein erfindungsgemäßes Filtergerät mit integrierter Saugeinrichtung in der Vorderansicht, teilweise vertikal geschnitten;
- Fig. 2: das Filtergerät im seitlichen vertikalen Schnitt.

Das Filtergerät 1 ist mit seinen zugehörigen Einrichtungen in ein quaderförmiges Gehäuse 2 integriert, das verhältnismäßig schmal und hoch gebaut und somit säulenförmig ist. In der Vorderansicht gesehen, beträgt seine Breite b etwa 30 cm, seine nach hinten gerichtete Tiefe t etwa 60 cm und seine Höhe h etwa 80 cm. Diese Größe ermöglicht es nicht nur, das Filtergerät 1 raumgünstig aufzustellen, sondern es eignet sich auch dazu, zahntechnischen Arbeitsplätzen, insbesondere -tischen, als Beistellgerät zugeordnet zu werden. Das Filtergerät 1 ist höheneinstellbar, vorzugsweise mittels vertikal in den Gehäuseboden eingeschraubten und festgestellten Schrauben 2a.

Das Gehäuse 2 begrenzt drei übereinander angeordnete Hauptabteilungen, nämlich eine untere Hauptabteilung 3, in der eine Saugeinrichtung hier in Form eines von einem Motor 4 angetriebenen Ventilators 5 angeordnet ist, eine mittlere Hauptabteilung 6, in der die eigentliche Filtervorrichtung 7 im oberen Bereich der Hauptabteilung 6 und darunter ein Filtergut-Sammelbehälter 8 angeordnet sind, und eine obere Hauptabteilung 9 für sonstige Einrichtungen, die bei der vorliegenden Ausgestaltung in zwei übereinander angeordnete Einzelabteilungen unterteilt ist, die zur Aufnahme einer elektronischen Steuereinrichtung 13 und einem Fach 14 für Werkzeug oder Zubehör, z.B. in Form einer Schublade, ausgebildet ist, wobei bei der vorliegenden Ausgestaltung das Fach 14 über dem Fach für die Steuereinrichtung 13 angeordnet ist. Am Frontseitenteil der die Steuereinrichtung 13 aufnehmenden Einzelabteilung sind manuell zu bedienende Steuerelemente und Anzeigeelemente angeordnet.

Die vorgenannten Hauptabteilungen 3, 6 und 9 erstrecken sich im wesentlichen von der Frontwand 15 bis zur Rückwand 16 und von der einen bis zur anderen Seitenwand 17, 18, wobei die mittlere Hauptabteilung 6 frontseitig eine im wesentlichen den zugehörigen gesamten Frontseitenteil umfassende Haupföffnung 19 aufweist, die durch eine Tür 21 mittels einer Öffnungsranddichtung dicht verschließbar und somit von vorne zugänglich ist. In vergleichbarer Weise kann auch die untere Hauptabteilung 3 von vorne zugänglich sein. Bei der vorliegenden Ausgestaltung ist die untere Hauptabteilung 3 durch die mittlere Hauptabteilung 6 hindurch zugänglich. Hierzu ist die Bodenwand 22 der mittleren Hauptabteilung 6 lösbar und nach oben und vorne herausnehmbar angeordnet. Nach einem Herausnehmen der Bodenwand 22 ist somit die untere Hauptabteilung 3 von oben durch die Hauptöffnung 19 hindurch zugänglich. In vergleichbarer Weise ist auch die obere Hauptabteilung 9 von vorne zugänglich, wobei die elektronische Steuereinrichtung 13 in Form mehrerer Einzelteile oder als Block, hier in der Schublade, nach vorne herausziehbar und somit von vorne zugänglich sind. In den Seitenwänden 17, 18 sind keine Zugangsöffnungen vorhanden, so daß das Filtergerät 1 seitlich unmittelbar angestellt werden kann.

Die Filtervorrichtung 7 weist ein - abgesehen von erforderlichen Zugangs-und Abgangsöffnungen - geschlossenes Filtervorrichtungsgehäuse 23 auf, das durch eine horizontale Teilungsfuge 24 in ein Unterteil 26 und ein Oberteil 25 unterteilt ist, wobei das Unterteil 26 durch den topfförmigen Sammelbehälter 8 gebildet ist, der oben eine rechteckige Behälteröffnung 27 aufweist, die unterhalb des Filters 28 der Filtervorrichtung 7 angeordnet ist. Die Filtervorrichtung 7 weist eine Haltevorrichtung 29 für den hohlzylindrischen Filter 28 auf, die mittels eines Elektromotors 32 um eine Drehachse 33 drehbar ist, die sich bei der vorliegenden Ausgestaltung horizontal und rechtwinklig zur Bedienungsseite 34, d.h. von vorne nach hinten, erstreckt, wodurch die verhältnismäßig schmale Breite B und die verhältnismäßig große Tiefe T des Filtergeräts 1 gut ausgenutzt werden. Zwischen dem Oberteil 25 und dem Unterteil 26 ist eine Ringdichtung 24a angeordnet, die vorzugsweise an einem dieser Teile befestigt, insbesondere geklebt, ist.

Das Oberteil 25 des Filtervorrichtungsgehäuses 23 ist mit vertikalen Seitenwänden 35, einer vertikalen Vorderwand 36 und einer im wesentlichen vertikalen Rückwand 37 kastenförmig geformt, wobei der obere Bereich des Filtervorrichtungsgehäuses 23 mehrkantig oder gerundet domförmig geformt ist. An der Rückwand 37 ist koaxial zur Drehachse 33 ein rundes Tragrohr 38 mit radialen Löchern 40 befestigt, das die Rückwand 37 nach hinten durchsetzen und mit einer rückseitigen Verlängerung einen Anschlußstutzen 39 für einen Schlauch oder ein Rohr aufweisen kann. Am vorderen Ende des Tragrohrs 38 ist der Elektromotor 32 koaxial angeflanscht, dessen Antriebswellenzapfen 41 sich koaxial nach vorne erstreckt. Auf dem Antriebswellenzapfen 41 sitzt drehfest ein Triebflansch 42 mit einer Nabe, auf der die vordere von zwei runden Haltescheiben 44a, 44b aufschraubbar ist. Zwischen den Haltescheiben 44a, 44b ist der Filter 28 durch leichtes axiales Zusammendrücken gehalten. Die hintere Haltescheibe 44b ist mittels eines Wälzlagers 45 auf dem hinteren Bereich des Tragrohrs 38 frei drehbar gelagert und mittels einer Ringdichtung 46 abgedichtet. Die Haltescheiben 44a, 44b weisen auf ihren einander zugewandten Seiten jeweils eine an die Querschnittsform und Größe des Filters 28 angepaßte Ringnut auf, in denen der hohlzylindrische Filter 28 mit seinen Ringenden sitzt. Vorzugsweise ist innerhalb des Filters 28 ein hier ebenfalls hohlzylindrischer Sicherheitsfilter 48 angeordnet und zwischen den Haltescheiben 44a, 44b gehalten, die hier zu jeweils eine weitere innere Ringnut aufweisen, in denen die Ringenden des Sicherheitsfilters 48 sitzen. Zwischen dem Filter 28 und dem Sicherheitsfilter 48 ist ein radialer Abstand und somit ein Ringfreiraum 51 vorhanden. Der Filter 28 bzw. der Sicherheitsfilter 48 umgeben somit das Tragrohr 38 und den Elektromotor 32 koaxial und einem radialen Abstand, wodurch ein weiterer Ringfreiraum 52 gebildet ist.

Das Tragrohr 38 und der damit starr verbundene Elektromotor 32 sind durch ein Stützlager 53 an der Vorderwand 36 des Oberteils 26 abgestutzt. Vorderseitig weist das Oberteil 25 eine Montageöffnung 54 auf, die größer bemessen ist, als die vordere Haltescheibe 44a und der Filter 28, so daß diese Teile von vorne montiert bzw. demontiert werden können. Die Montageöffnung 54, die bei der vorliegenden Ausgestaltung fast den gesamten Bereich der Vorderwand 36 einnimmt, ist durch eine Verschlußtür dicht verschließbar. Bei der vorliegenden Ausgestaltung ist eine nach unten wegklappbare Klapptür 55 vorgesehen, die im Bereich ihrer Unterkante in einem Gelenk 56 mit horizontaler Gelenkachse angelenkt ist und ein an ihrer Innenseite befestigtes Lagerteil, hier eine Lagernabe 58, trägt, des beim Schließen der Klapptür 55 in oder auf ein passendes Lagerteil, hier einen Lagerzapfen 57, steckbar ist, das mittels eines Wälzlagers 61 in der Nabe des Triebflansches 42 drehbar gelagert und dadurch axial gehalten ist, so daß es beim Öffnen der Klapptür 55 am Triebflansch 42 verbleibt. Beim Schließen der Klapptür 55 werden die vorgenannten Lagerteile 57 und 58 selbsttätig zusammengeführt, wobei dazwischen eine vorzugsweise formschlüssige Drehsicherung vorhanden sein kann, damit das Lagerteil 57 im Betrieb nicht mitdreht.

Die Teilungsfuge 24 befindet sich in einem nach unten gerichteten Abstand von der Unterseite des Filters 28.

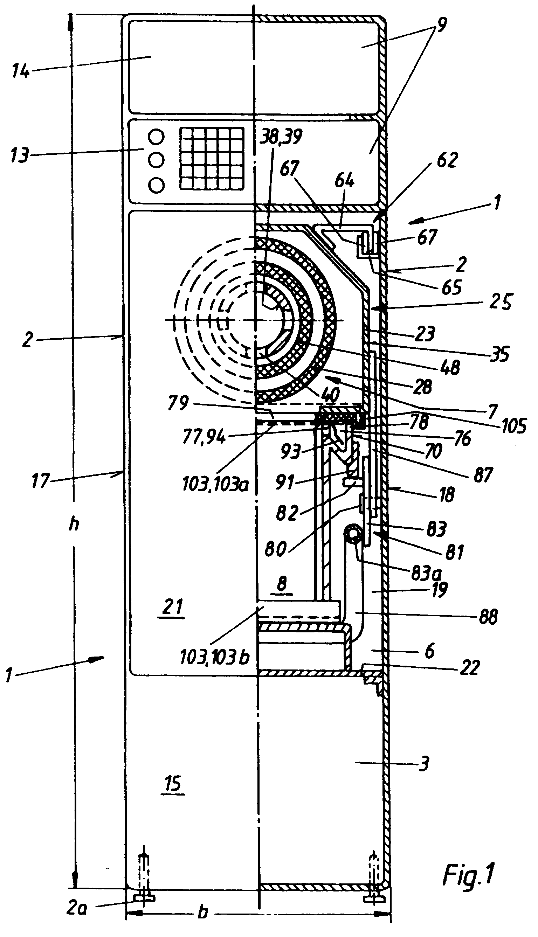

Das Filtervorrichtungsgehäuse 23 ist schwingungsgedämpft, nämlich vertikal und horizontal frei schwimmend bzw. federnd im Gehäuse 2 gelagert. Hierzu dient eine Aufhängevorrichtung 62 mit elastischen Tragteilen, insbesondere Gummistücken, am oberen Bereich des Oberteils 25. Wie insbesondere Fig. 1 deutlich zeigt, sind am Oberteil 25 seitlich abstehende Winkel-Tragschenkel 64 befestigt, die am Gehäuse 2 befestigte horizontale Tragschienen 65 übergreifen, wobei die Tragschenkel 64 bei Zwischenlage von elastischen Gummistücken auf den Tragschienen 65 abgestützt sind. Diese Ausgestaltung ermöglicht eine einfache und leichte Montage des Filtervorrichtungsgehäuses 23 durch Einschieben bzw. Herausziehen von vorne. Zwischen vertikalen Stegen der Tragsehenkel 64 und Tragschienen 65 können vorzugsweise Schwingungsdämpfer 67 in Form von Gummistücken vorhanden sein, wobei horizontale Querschrauben vertikale Stege der Tragschenkel 64 und Tragschienen 65 und die Schwingungsdämpfer 67 durchfassen können.

Der topfförmige Sammelbehälter 8 weist eine im wesentlichen ebene Bodenwand 68 rechteckiger Form und vier sich von dieser nach oben erstreckende Umfangswände, nämlich zwei einander gegenüberliegende Seitenwände 69 sowie eine Vorderwand 71 und eine Rückwand 72 auf, so daß sich die rechteckige Behälteröffnung 27 ergibt, die von den Umfangswänden begrenzt ist und deren Form und Größe der unterseitigen Öffnung des Oberteils 26 entspricht. Der obere Randbereich des Sammelbehälters 8 ist durch einen nach außen abstehenden Kragen 70 mit einem seitlich abstehenden Kragenschenkel und einem sich von diesem nach oben erstreckenden Kragenschenkel, die eine nach oben offene Außenrinne 76 begrenzen. Sowohl der durch die Umfangswände gebildete Innenrand 77 als auch der Außenrand 78 liegen dicht an der flachen Ringdichtung 24a an, die an einem Randflansch am unteren Rand des Oberteils 26 befestigt ist. Die Höhe des Sammelbehälters 8 ist etwas geringer bemessen als der vertikale Abstand zwischen Tragteilen auf der Bodenwand 22, auf denen der Sammelbehälter 8 aufstellbar ist und der Unterseite des Oberteils 26. Der Sammelbehälter 8 kann somit bequem von vorne in die mittlere Hauptabteilung 6 eingeschoben und herausgezogen werden. Zum dichten Verschließen des Sammelbehälters 8 an der Unterseite des Oberteils 26 dient eine Schließvorrichtung 81, die den Sammelbehälter 8 untergreift und nach oben gegen das Oberteil 26 drückt und in dieser Position sichert. Vorzugsweise sind zu beiden Seiten des Sammelbehälters 8 spiegelbildlich angeordnete Schließvorrichtungen 81 mit Druckteilen z.B. in Form von quer angeordneten Druckbolzen 82 vorgesehen, die an einem auf Lagerbolzen 80 schwenkbar gelagerten Hebelarm 83 befestigt sind, von seitlich außen den Kragen 70 in etwa mittlerer Position untergreifen und durch Schwenken dieser Druckbolzen 82 durch gleichzeitiges Drehen der zu beiden Seiten angeordneten Hebelarme 82 den Sammelbehälter 8 anheben und gegen die Ringdichtung 24a drücken. In der Drehendstellung der Hebelarme 83 befinden sich die Druckbolzen 82 direkt über dem zugehörigen Lagerbolzen 80 oder vorzugsweise geringfügig hinter dem oberen Totpunkt, wodurch ein selbsttätiges Lösen der Schließvorrichtung 81 verhindert ist. Zur gleichzeitigen Drehung der Hebelarme 83 dient ein U-förmiger Handbügel 85, der den Sammelbehälter 8 von der Vorderseite her U-förmig umgreift. In der nach oben geschwenkten Offenstellung des Handbügels 85 befindet sich sein vorderer Bügelsteg 86 oberhalb des Sammelbehälters 8, so daß er seiner Einschiebung und Herausziehung nicht im Wege steht. Die Drehachsen 84 können an den Seitenwänden 17, 18 des Gehäuses 2 befestigt sein. Vorzugsweise sind die Drehachsen 84 am Oberteil 26 befestigt und zwar hier an von den Seitenwänden des Oberteils 26 nach unten ragenden Seitenwangen 87 befestigt. Hierdurch ist auch die Schließvorrichtung 81 ein Teil der Filterbaueinheit, und sie ist deshalb nicht nur mit dieser Baueinheit schwingungsgedampft gelagert, sondern sie kann auch an dieser Baueinheit vormontiert werden.

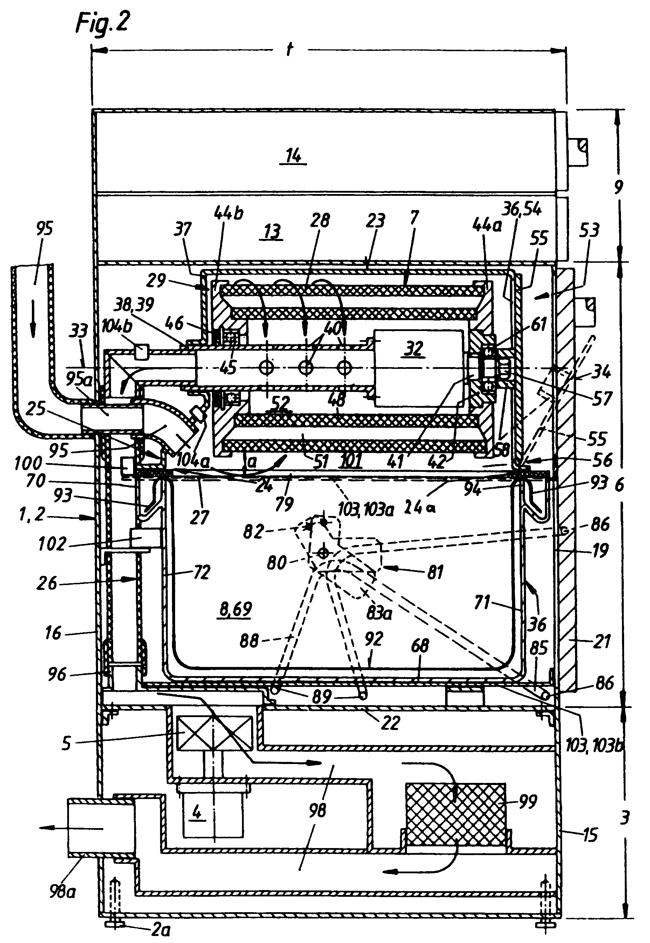

Der Handbügel 85 ist vorzugsweise so angeordnet und bemessen, daß sein freies Bügelende in der Schließstellung (in Fig. 2 mit durchgezogenen Linien dargestellt) sich unmittelbar hinter der Innenfläche der Tür 21 und dabei in einem größeren Vertikalabstand von den Lagerbolzen 80 befindet. Bei einer solchen Anordnung kann die Tür 21 nur dann geschlossen werden, wenn sich der Handbügel 85 in seiner Schließstellung befindet. Bei einem nicht korrekten Verschluß befindet sich der Handbügel 85 oberhalb seiner Schließstellung, wobei er aufgrund seiner Bogenbewegung in den Bewegungsbereich der Tür 21 hineinsteht, so daß diese nicht geschlossen werden kann. Hierdurch ist eine mechanische Sicherheitsvorrichtung geschaffen, die der Bedienungsperson deutlich anzeigt, daß der Sammelbehälter 8 nicht dicht angeschlossen ist. Dies ist insbesondere bei der Filterung von gesundheitsgefährdenden Stoffen von Bedeutung, wie sie auch in der Dentaltechnik verwendet, um zu verhindern, daß diese Stoffe nach außen in den das Filtergerät 1 umgebenden Arbeitsraum gelangen.

Bei der vorliegenden Ausgestaltung ist der Handbügel 85 mit seinen freien U-Enden an Doppelarmen 83a der Hebelarme 83 befestigt. Dabei ist ein weiterer U-förmiger Verschlußbügel 88 vorgesehen, der sich von den Hebelarmen 83 nach unten erstreckt und mit seinem Bügelsteg 89 den Sammelbehälter 8 untergreift und dabei gleichzeitig zusätzlich stützt, wodurch die Druckbelastung von den Druckbolzen 82 auf den Kragen 70 reduziert werden kann. Um die Flächenpressung zwischen den Druckbolzen 82 und dem Kragen 70 zu verringern, ist es vorteilhaft, im Bereich der Druckbolzen 82 an der Unterseite des Kragens 70 eine Leiste 91 aus hartem Material, wie z.B. Stahl, einzubetten, oder in eine Nut fest einzusetzen, gegen die der zugehörige Druckbolzen 82 drückt.

Insbesondere beim Filtern von umweltschädlichen und gesundheitsgefährdenden Substanzen sind folgende Ausgestaltungen vorteilhaft. Damit beim Herausnehmen des Sammelbehälters 8 kein Staub vom Filter 28 oder vom Gehäuseoberteil 25 in das Gehäuse der Hauptabteilung 6 bzw. auf die Bodenwand 22 fällt, wird ein vorzugsweise plattenförmiger Schieber 103 nach dem Absenken des Sammelbehälters 8 (ca. 8 mm nach unten) zwischen zwei seitlichen Führungsschienen 105 und dem Oberteil 25 bzw. der Ringdichtung 24a eingeschoben (Position 103a).

Der vorzugsweise aus ferromagnetischem Material wie Stahl bestehende Schieber 103 kann mittels einer Haltevorrichtung oder einer Führung verschiebbar und dicht am Gehäuseoberteil 25 gehalten sein, z.B. mittels wenigstens einem, insbesondere an der Rückseite angeordneten, oder mehreren verteilt angeordneten Permanentmagneten 100, und gegen die Dichtung 24a gezogen oder gedrückt werden, um die Abdichtung während der Abwesenheit des Sammelbehälters 8 zu verbessern.

Die Führungsschienen 105 sind vorzugsweise Winkelschienen, die seitlich am Gehäuseoberteil 25 befestigt sind (Fig. 1).

Der Schieber 103 wird vor dem Absenken des Sammelbehälters 8 aus einer Parkposition 103b, in der er unter dem Sammelbehälter 8 eingeschoben ist, entnommen, ansonsten funktioniert der Absenkmechanismus nicht, da er gesperrt ist.

Der Sammelbehälter 8 läßt sich nach dem Entleeren auch nicht in die Funktionsstellung bringen, wenn nicht zuvor der Schieber 103 aus einer Parkposition 103b entfernt wurde. Dies läßt sich dadurch erreichen, daß der Handbügel 85, hier der Bügelsteg 89, gegen das vorzugsweise vordere Ende des Verschlußteils 103 stößt, in dessen Bewegungsbahn das Verschlußteil 103 in seiner Park- bzw. Abstellposition hineinragt, d.h. der Standhebel 85 läßt sich nicht unter den Sammelbehälter 8 schwenken, so daß sich auch die Tür 21 nicht schließen läßt.

Die Hubhöhe der Anschluß- bzw. Kupplungsvorrichtung ist etwas größer bemessen als die Dicke des Verschlußteils 103. In der Verschlußstellung des Verschlußteils 103 steht das vordere Ende nahe oder direkt hinter der Tür 21. Dies gilt vorzugsweise auch für die Abstellposition. Wenn die Tür 21 sich nicht schließen läßt, ist es ein Erkennungszeichen, daß der ordnungsgemäße bzw. dichte Anschluß des Sammelbehälters nicht gewährleistet ist. Durch einen Schaltkontakt (nicht dargestellt) zwischen der Tür 21 und dem Gehäuse 2 läßt sich dies durch einen Summer akustisch oder durch eine Warnlampe visuell verdeutlichen, oder es läßt sich auch durch eine Schaltung das Einschalten des Filtergerätes verhindern. Ein solcher Schaltkontakt kann auch zwischen dem Gehäuse 2 oder Anbauteilen und dem Verschlußteil 103 in dessen Verschlußstellung wirksam sein.

Das sind sehr vorteilhafte Sicherheitsmaßnahmen zur Vermeidung des unbeabsichtigten Entweichens von insbesondere gesundheitsgefährdenden Stäuben.

Außerdem wird der Schieber beim Herausziehen von der Dichtung 24a abgestreift, der Staub fällt dabei in den darunter stehenden Sammelbehälter 8.

Außerdem ist es vorteilhaft, im Sammelbehälter 8 einen Beutel 92 insbesondere aus Kunststoffolie anzuordnen, der vorzugsweise so tief bemessen ist, daß seine freien Ränder für die Entsorgung z.B. durch Verknoten beschlossen werden können. Der Beutel 92 ist am Rand des Sammelbehälters 8 abzudichten, damit möglichst kein Filtergut hinter den Beutel 92 oder in den Innenraum des Gehäuses 2 gelangt. Bei der vorliegenden Ausgestaltung wird der überstehende Rand 93 des in den Sammelbehälter 8 eingesetzten Beutels 92 über den Innenrand 77 gekrempelt und in die Außenrinne 76 gegebenenfalls gefaltet eingelegt. Hierdurch ist der Rand 93 zwischen dem Innenrand 77 und der Ringdichtung 24a festgeklemmt. Die eigentliche Dichtfunktion nach außen wird vom Kragen 70 gewährleistet, der von unten gegen die Ringdichtung 24a drückt. Im Innenrand 77 sind mehrere auf dem Umfang verteilt angeordnete Löcher oder Ausnehmungen 94 vorgesehen, deren Funktion weiter unten noch erklärt wird.

Das Filtervorrichtungsgehäuse 23 ist an eine vorzugsweise flexible Zuführungsleitung 95, insbesondere Schlauchleitung, für zu filternde Luft angeschlossen, die die Rückwand 16 des Gerätegehäuses 2 in einer Durchführung, z.B. in Form eines Anschlußstutzens 95a, durchsetzt und an einen Leitungsanschluß in der Rückwand 37 des Oberteils 26 angeschlossen ist. Ein weiterer vorzugsweise flexibler Rohr- oder Schlauchabschnitt erstreckt sich vom Anschlußstutzen 39 des Tragrohrs 38 zum Ventilator 5, wobei er an einen Anschlußstutzen 96 der Bodenwand 6 angeschlossen ist, der sich hinter dem Sammelbehälter 8 befindet. Unter der Bodenwand 12 befindet sich der Ventilator 5 in einem weiteren Leitungsabschnitt 98 in der unteren Hauptabteilung 3, die sich U-förmig zu einem Aktivkohlefilter 99 und dann zur Rückwand 16 erstreckt, die sie in einer Durchführung 98a durchsetzt und an die eine weiterführende Abführungsleitung angeschlossen sein kann.

Im folgenden wird die Funktion des Filtergeräts 1 beschrieben.

Vor einem Filtervorgang ist der Sammelbehälter 8 dicht am Oberteil 25 anzuschließen. Anschließend kann der Ventilator 5 eingeschaltet werden, wodurch der Filtervorgang beginnt. Der Ventilator 5 saugt aufgrund der Luftströmung die zu filternde Luft in den Innenraum des Filtervorrichtungsgehäuses 23 ein, der aufgrund seines gegenüber der Zuführungsleitung 95 vergrößerten Volumens einen Beruhigungsraum 101 darstellt. Der letzte Endbereich der Zuführungsleitung 95 ist schräg nach unten gerichtet, vorzugsweise in die Mitte des Sammelbehälters 8. Um dies auf einfache Weise zu ermöglichen, ist bei der vorliegenden Ausgestaltung die Rückwand 37 des Oberteils 25 im Bereich der Zuführungsleitungsdurchführung nach hinten schräg abfallend geformt. Beim Eintritt in den Beruhigungsraum 101 beruhigt sich die Strömung, wobei grobes Filtergut direkt in den Sammelbehälter 8 bzw. in den Beutel 92 absinkt. Leichteres Filtergut wird mit dem Luftstrom nach oben zum Filter 28 gelenkt, den einschließlich des Sicherheitsfilters 48 der Luftstrom auf der gesamten Mantelfläche radial einwärts durchströmt und durch die radialen Löcher 40 in das Tragrohr 38 und dann weiter zum Ventilator 5 strömt. Druckseitig vom Ventilator 5 wird die Luft noch durch den Aktivkohlefilter 99 geführt, und sie kann dann in den das Filtergerät 1 umgebenden Raum abgegeben werden oder in einer nicht dargestellten Rohr- oder Schlauchleitung weitergeführt und an die Außenatmosphäre abgegeben werden. Beim Durchströmen des Filters 28 lagert sich das Filtergut auf dessen Mantelfläche ab, so daß die Durchlässigkeit des Filters 28 sich verringert und der Unterdruck im Bereich zwischen dem Ventilator 5 und dem Filter 28 sich erhöht.

Vorzugsweise ist der Ventilator 5 bzw. Elektromotor 32 so drehzahlgeregelt, daß die geförderte Luftmenge immer einem vorbestimmten, optimalen Wert entspricht, was nach Maßgabe z.B. eines Durchflußmessers mittels einer Regeleinrichtung geregelt werden kann. Hierdurch wird nicht nur eine zu große Luftförderung bzw. -verbrauch verhindert, sondern in dem Fall, indem die zu filternde Luft von einem zahntechnischen Arbeitsplatz abgesaugt wird, wird zum einen verhindert, daß ein unangenehmer Luftzug an den Händen des Benutzers auftritt, oder zum anderen zu wenig Luft abgesaugt wird.

Der Beutel 92 ist dem beim Ein- und Ausschalten des Ventilators 5 und auch durch unterschiedliche Verschmutzungsgrade des Filters 28 Druckunterschieden ausgesetzt, die zu entsprechenden Bewegungen der Beutelwand führen, wodurch diese erheblich beansprucht wird und ermüden sowie brechen kann. Dieses Problem ist insbesondere beim Filtern umweltgefährender Substanzen von besonderer Bedeutung. Um diese Beanspruchungen des Beutels 92 zu vermeiden, ist wenigstens ein zur Außenseite des Beutels führender Bypass vorgesehen, der zu einem Druckausgleich innerhalb und außerhalb des Beutels 92 führt, wodurch die vorgenannten Belastungen auf den Beutel 92 vermieden sind. Bei der vorliegenden Ausgestaltung sind solche Bypässe durch die Löcher oder Ausnehmungen 94 gebildet, durch die sich der jeweils herrschende Druck in die Außenrinne 76 und von dort zur Rückseite des Beutels 92 fortpflanzen kann. Dabei bleibt durch den Außenrand 78 die Abdichtung des Filterraumes aufrechterhalten.

Wenn der Filter 26 sich im Laufe der Betriebszeit zusetzt und gereinigt werden soll, was sich durch eine Druckerhöhung im Bereich zwischen dem Filter 26 und dem Ventilator 5 bemerkbar macht, wird der Ventilator 5 abgeschaltet und anschließend - gegebenenfalls nach dessen Stillstand - der Elektromotor 32 eingeschaltet, der die Haltevorrichtung 29 mit dem Filter 28 in Rotation versetzt. Hierdurch wird das auf den Filter 28 gelagerte und gegebenenfalls auch geringfügig in den Filter 28 eingedrungene Filtergut abgeschleudert, wodurch die beabsichtigte Reinigung erzielt wird. Bei Versuchen, bei denen ein hohlzylindrischer Filter 28 mit einem Durchmesser von etwa 180 mm verwendet wurde, hat sich eine Drehzahl von etwa 1200 Umdrehungen pro Minute als ausreichend erwiesen, um den Filter 28 in der vorbeschriebenen Weise zu reinigen. Diese Reinigung kann an der Arbeitsstelle des Filters 28 erfolgen, ohne daß er demontiert zu werden braucht.

Das vom Filter abgeschleuderte Filtergut fällt zwangsläufig aufgrund der Schwerkraft in den Sammelbehälter 8. Die Reinigungswirkung ist am größten, wenn die Außenmantelfläche des Filters 28 kreisrund ist, weil die beim Drehen entstehende Fliehkraft direkt auf das Filtergut wirken kann. Es ist bei Versuchen jedoch ermittelt worden, daß auch solche hohlzylindrischen Filter, bei denen die Filtermantelfläche durch sich in Umfangsrichtung aneinander anschließende Falten gebildet wird, sich vorzüglich dazu eignet, nach dem erfindungsgemäßen Verfahren gereinigt zu werden.

Die Reinigungswirkung kann dadurch forciert werden, daß während der Drehung, d.h. während der Beaufschlagung des Filtergutes mit Fliehkraft, der Filter 28 etwas erschüttert wird, z.B. durch Klopfen oder Vibrieren. Solche Erschütterungen forcieren die Ablösung des Filterguts vom Filter 28.

Für die Zeitpunkte, zu denen der Filter 28 in Rotation versetzt werden soll, gibt es verschiedene Möglichkeiten. Wenn in der Strömungsleitung zwischen dem Filter 28 und dem Ventilator 5 ein Unterdrucksensor vorgesehen ist, der durch Signalleitungen mit der vorhandenen Steuer- oder Riegeleinrichtung verbunden ist, dann kann der Filter 28 automatisch in Rotation versetzt werden, wenn ein bestimmter Unterdruck überschritten wird.

Alternativ hierzu kann auch eine Differenzdruckmeßeinrichtung oder ein Differenzdruckschalter eingesetzt werden, der die Unterdruckdifferenz vor und nach dem Filter 28 mißt. Hierzu kann ein Drucksensor 104a im Gehäuseoberteil 25 und ein Unterdrucksensor 104b in der Strömungsleitung zwischen Filter 28 und Ventilator 5 vorgesehen sein.

Es ist aber auch möglich, daß der Unterdrucksensor lediglich eine Anzeige in Funktion setzt, die der Bedienungsperson signalisiert, daß der Filter 28 von Hand eine bestimmte Zeit lang in Rotation versetzt werden soll. Für diesen Fall ist dem Filtergerät 1 ein entsprechendes Bedienungselement zugeordnet. Eine andere Möglichkeit besteht darin, - falls kein Unterdrucksensor vorgesehen ist - eine Rotation des Filters 28 in unregelmäßigen oder regelmäßigen (beispielsweise jeden Morgen) vorzusehen.

Anstatt einer Unterdrucküberwachung kann auch das geförderte Luftvolumen überwacht bzw. gemessen werden, um eine Drehung des Filters 28 zu bestimmen und einzuleiten.

Der Filtervorgang kann nach Abschaltung der Rotation wieder begonnen werden.

Dem Sammelbehälter 8 ist eine Einrichtung zur Überwachung oder Messung des Füllstandes zugeordnet. Hierbei kann es sich um ein Schauglas oder eine elektrisch funktionierende Einrichtung handeln. Bei der vorliegenden Ausgestaltung ist ein gegebenenfalls kapazitiv wirksamer Füllstandsmesser 102 mittels einem Halter innen am Gehäuse 2 befestigt, der durch eine nicht dargestellte Signalleitung mit der elektronischen Steuereinrichtung 13 verbunden ist und ein Warnsignal abgibt oder vorzugsweise den Ventilator 5 und somit das Filtergerät abschaltet.

Ein erfindungsgemäßes Filtergerät 1 eignet sich jeweils sowohl für einen oder zwei zahntechnische Arbeitsplätze, oder es kann bei entsprechender Kapazitätsauslegung auch mit einer Vielzahl Arbeitsplätze verbunden sein. Dabei kann das Filtergerät 1 im die Behandlungsplätze enthaltenden Raum angeordnet sein, oder es kann in einem besonderen Raum oder auch außen von einem die Arbeitsplätze enthaltenen Gebäude angeordnet sein. Im ersten Falle läßt sich Heizenergie einsparen, da die gefilterte Luft dem Raum wieder zugute kommt.

In allen vorbeschriebenen Fällen ist es vorteilhaft, den Ventilator 5 in Abhängigkeit von der Einschaltung eines Bearbeitungsgerätes an wenigstens einem der vorhandenen Arbeitsplätze so zu steuern, daß nur bei der Einschaltung wenigstens eines der vorhandenen Arbeitsgeräte der Ventilator in Betrieb gesetzt wird.

## Patentansprüche

1. Filtergerät (1) für ein,gasförmiges Medium, mit
- einem Gehäuse (2),
- einem im Gehäuse (2) angeordneten Filtergehäuse (23), in dem in einem Strömungsweg für das gasförmige Medium ein Filter (7) angeordnet ist,
- und einem unterhalb des Filters (7) angeordneten Sammelbehälter (8) für das Filtergut,
wobei der vom Filter (7) abführende Strömungswegabschnitt dem Sammelbehälter (8) abgewandt ist,
**dadurch gekennzeichnet,**
daß das Filtergehäuse aus einem oberen und einem unteren Teil besteht,
daß der Sammelbehälter (8) als separates Bauteil im Gehäuse (2) angeordnet ist,
daß der Sammelbehälter durch den unteren Teil des Filtergehäuses (23) gebildet und durch eine Kupplungseinrichtung (81) am oberen Teil des Filtergehäuses (23) lösbar ankuppelbar ist,
und daß der Sammelbehälter durch eine seitliche Öffnung (19) im Gehäuse (2) entfernbar ist.

2. Filtergerät nach Anspruch 1,
**dadurch gekennzeichnet,**
daß dem Sammelbehälter (8) ein vorzugsweise verschließbarer Innenbehälter, insbesondere in Form eines Beutels (92), aus folienförmigem Material zugeordnet ist.

3. Filtergerät nach Anspruch 2,
**dadurch gekennzeichnet,**
daß ein Druckausgleich zwischen der Innenseite und der Außenseite des Innenbehälters (92) vorgesehen ist.

4. Filtergerät nach einem der Ansprüche 2 bis 3,
**dadurch gekennzeichnet,**
daß der Innenbehälter (92) durch Klemmen insbesondere seines Randbereiches zwischen dem Sammelbehälter (8) und dem Filtergehäuse (23) gehalten ist.

5. Filtergerät nach einem der Ansprüche 2 bis 4,
**dadurch gekennzeichnet,**
daß der Sammelbehälter (8) einen inneren Klemmrand (77) und einen äußeren Dichtungs` rand (78) aufweist, wobei vorzugsweise dazwischen eine Rinne (93) zur Aufnahme eines Randabschnitts des Innenbehälters (92) vorgesehen ist.

6. Filtergerät nach Anspruch 5,
**dadurch gekennzeichnet,**
daß im inneren Klemmrand (77) wenigstens eine, vorzugsweise mehrere auf dem Umfang verteilt angeordnete Öffnungen (94) vorgesehen sind.

7. Filtergerät nach einem der vorherigen Ansprüche,
**dadurch gekennzeichnet,**
daß die Kupplungseinrichtung (81) zu beiden Seiten des Sammelbehälters (8) an diesem angreifende Druckelemente (82) aufweist, mit denen der Sammelbehälter (8), vorzugsweise durch ein Hebelgestänge (85), nach oben gegen das Filtergehäuse (23) drückbar ist, wobei das Hebelgestänge (85) insbesondere manuell betätigbar und von vorne zugänglich ist.

8. Filtergerät nach einem der vorherigen Ansprüche,
**dadurch gekennzeichnet,**
daß der Filter (28) durch eine verschließbare Öffnung im Gehäuse (2) insbesondere von vorne zugänglich ist.

9. Filter nach einem der vorherigen Ansprüche,
**dadurch gekennzeichnet,**
daß die die Zugänglichkeit zum Sammelbehälter (8) und zum Filter (28) gewährleistende Öffnung (19) im Gehäuse (2) vorzugsweise eine gemeinsame Öffnung ist und durch insbesondere eine gemeinsame Tür (21) verschließbar ist.

10. Filtergerät nach einem der vorherigen Ansprüche,
**dadurch gekennzeichnet,**
daß das Filtergehäuse (23) im Gehäuse (2) schwingungsgedämpft bzw. schwimmend gelagert ist.

11. Filtergerät nach einem der vorherigen Ansprüche,
**dadurch gekennzeichnet,**
daß ihm ein eigener, die erforderliche Saugluftströmung erzeugender Ventilator (5) zugeordnet ist, der vorzugsweise im Gehäuse (2), insbesondere in dessen unteren Bereich, angeordnet ist,

12. Filtergerät nach Anspruch 11,
**dadurch gekennzeichnet,**
daß dem Sammelbehälter (8) ein Füllstandsanzeiger (102) zugeordnet ist, der bei vollem Sammelbehälter (8) ein Signal an eine vorhandene elektrische Steuereinrichtung (13) abgibt, die ein Warnsignal aktiviert oder den Ventilator (5) abschaltet.

13. Filtergerät nach einem der vorherigen Ansprüche,
**dadurch gekennzeichnet,**
daß es mit übereinander angeordneten Hauptabteilungen (5, 7, 8, 13, 14) in Form einer quaderförmigen Säule ausgebildet ist.

14. Filtergerät nach Anspruch 13,
**dadurch gekennzeichnet,**
daß die Hauptabteilungen der Sammelbehälter (8), der darüber angeordnete Filter (7), eine insbesondere unter dem Sammelbehälter (8) angeordnete Saugeinrichtung (5) und eine insbesondere über dem Filter (7) angeordnete Steuereinrichtung (13) sind.

15. Filtergerät nach einem der vorherigen Ansprüche,
**dadurch gekennzeichnet,**
daß die Kupplungseinrichtung (81) zum dichten Ankuppeln des einen unteren Teil des Filtergehäuses (23) bildenden Sammelbehälters im Bereich einer Öffnung für den Sammelbehälter (8) am oberen Teil des Filtergehäuses (23) vorgesehen ist und daß das obere Teil (25) des Filtergehäuses im Bereich seiner Öffnung durch ein Verschlußteil (103) verschließbar ist.

16. Filtergerät nach Anspruch 15,
**dadurch gekennzeichnet,**
daß das Verschlußteil durch die Öffnung (19) des Gehäuses (2) zugänglich ist und in einer Haltevorrichtung oder einer Führung am Gehäuse (2, 23) verschiebbar gelagert ist.

17. Filtergerät nach Anspruch 15 oder 16,
**dadurch gekennzeichnet,**
daß das Verschlußteil ein vorzugsweise plattenförmiger Schieber (103) ist.

18. Filtergerät nach einem der Ansprüche 15 bis 17,
**dadurch gekennzeichnet,**
daß das Verschlußteil zwischen dem oberen Gehäuseteil (25) und dem vorzugsweise abgesenkten Sammelbehälter (8) einschiebbar und wieder herausziehbar ist.

19. Filtergerät nach einem der Ansprüche 15 bis 18,
**dadurch gekennzeichnet,**
daß eine Sicherheitsvorrichtung vorgesehen ist, die dann, wenn das Verschlußteil (103) sich nicht in seiner Verschlußstellung (103a) befindet, ein akustisches oder visuelles Warnsignal erzeugt oder eine Einschaltung des Filtergerätes (1) verhindert oder ein Lösen oder Entnehmen des Sammelbehälters (8) sperrt bzw. verhindert.

20. Filtergerät nach einem der Ansprüche 15 bis 19,
**dadurch gekennzeichnet,**
daß ein Abstellplatz (103b) für das Verschlußteil (103) so im vorzugsweise vertikalen Öffnungsweg des Verschlußteiles (103) angeordnet ist, daß das sich am Abstellplatz (103b) befindende Verschlußteil (103) den Sammelbehälter (8) oder die Anschluß- bzw. Kupplungsvorrichtung (81) oder ein damit in Verbindung stehendes Teil bezüglich seiner zugehörigen Öffnungsbewegung sperrt.

21. Filtergerät nach Anspruch 20,
**dadurch gekennzeichnet,**
daß eine Sicherheitsvorrichtung vorgesehen ist, die einen Anschluß des Sammelbehälters (8) und/oder eine Inbetriebnahme des Filtergerätes nur dann gestattet, wenn das Verschlußteil (103) vom Abstellplatz (103b) entfernt ist.

22. Filtergerät nach einem der Ansprüche 15 bis 21,
**dadurch gekennzeichnet,**
daß das Verschlußteil (103) ein Sperrteil (sein vorderes Ende) aufweist, das dann, wenn das Verschlußteil (103) sich nicht in seiner Verschluß-Endstellung befindet, die Tür (21) des Gehäuses (2) dagegen stößt und am Schließen gehindert wird.

## Claims

1. Filter apparatus (1) for a gaseous medium, having
- a housing (2),
- a filter housing (23) arranged in the housing (2), in which filter housing a filter (7) is arranged in a flow path for the gaseous medium,
- and a collection container (8) for the filtrate, arranged below the filter (7), whereby the part of the flow path discharging from the filter (7) is directed away from the collection container (8),
characterised in that,
the filter housing consists of an upper and a lower part,
in that the collection container (8) is arranged as a separate component in the housing (2),
in that the collection container is formed by the lower part of the filter housing (23) and can be releasibly coupled to the upper part of the filter housing (23) by means of a coupling device (81), and
in that the collection container is removable by means of a side opening (19) in the housing (2).

2. Filter apparatus according to claim 1,
characterised in that,
the collection container (8) has associated therewith a preferably closeable inner container, in particular in the form of a bag (92), of foil-like material.

3. Filter apparatus according to claim 2,
characterised in that,
there is provided pressure equalisation means between the interior and the exterior of the inner container (92).

4. Filter apparatus according to any of claims 2 to 3,
characterised in that,
the inner container (92) is held by means of clamping, in particular of its edge region, between the collection container (8) and the filter housing (23).

5. Filter apparatus according to any of claims 2 to 4,
characterised in that,
the collection container (8) has an inner clamping edge (77) and an outer sealing edge (78), whereby there is provided preferably therebetween a groove (93) for receiving an edge portion of the inner container (92).

6. Filter apparatus according to claim 5,
characterised in that,
in the inner clamping edge (77) at least one, preferably a plurality of openings (94) are provided arranged distributed on the periphery.

7. Filter apparatus according to any preceding claim,
characterised in that,
the coupling device (81) has pressure elements (82) to both sides of the collection container (8) which engage on the collection container, with which pressure elements the collection container (8) can be pressed upwardly against the filter housing (23) preferably by means of a lever bar (85), whereby the lever bar (85) is in particular manually actuable and accessible from the front.

8. Filter apparatus according to any preceding claim,
characterised in that,
the filter (28) is accessible by means of a closable opening in the housing (2), in particular from the front.

9. Filter apparatus according to any preceding claim,
characterised in that,
the opening (19) in the housing (2) which provides the access to the collection container (8) and to the filter (28) is preferably a common opening and is closable by means of an in particular common door (21).

10. Filter apparatus according to any preceding claim,
characterised in that,
the filter housing (23) is mounted in the housing (2) in a vibration-damped or floating manner.

11. Filter apparatus according to any preceding claim,
characterised in that,
there is associated therewith an own fan (5) which generates the necessary suction air flow, which fan is preferably arranged in the housing (2), in particular in its lower region.

12. Filter apparatus according to claim 11,
characterised in that,
there is associated with the collection container (8) a filling indicator (102), which in the case of a full collection container (8) delivers a signal to an electrical control device (13) present, which control device activates a warning signal or turns the fan (5) off.

13. Filter apparatus according to any preceding claim,
characterised in that,
that it is configured in the form of a block-like column with main compartments (5, 7, 8, 13, 14) arranged one above another.

14. Filter apparatus according to claim 13,
characterised in that,
the main compartments are the collection container (8), the filter (7) arranged thereabove, a suction device (9) arranged in particular below the collection container (8) and a control device (13) arranged in particular above the filter (7).

15. Filter apparatus according to any preceding claim,
characterised in that,
the coupling device (81) is provided for sealed coupling of the collection container - forming a lower part of the housing (2) - in the region of an opening for the collection container (8) at the upper part of the housing (2) and in that the upper part (25) of the filter housing is closeable by means of a closure part (103) in the region of its opening.

16. Filter apparatus according to claim 15,
characterised in that,
the closure part is accessible through the opening (19) of the housing (2) and is displaceably mounted in a holding device or a guide on the housing (2, 23).

17. Filter apparatus according to claim 15 or 16,
characterised in that,
the closure part is a preferably plate-like slider (103).

18. Filter apparatus according to any of claims 15 to 17,
characterised in that,
the closure part can be inserted between the upper housing part (25) and the preferably lowered collection container (8) and can be taken out again.

19. Filter apparatus according to any of claims 15 to 18,
characterised in that,
a safety device is provided which, if the closure part (103) is not located in its closure position (103a), generates a acoustic or visual warning signal or prevents switching on of the filter apparatus (1) or blocks or hinders a release or removal of the collection container (8).

20. Filter apparatus according to any of claims 15 to 19,
characterised in that,
a parked position (103b) for the closure part (103) is so arranged in the preferably vertical opening path of the closure part (103) that the closure part (103) located in the parked position (103b) blocks the collection container (8) or the connection or coupling device (81) or a part connected therewith, with regard to its associated path of opening.

21. Filter apparatus according to claim 20,
characterised in that,
a safety device is provided which allows a connection of the collection container (8) and/or placing into operation of the filter apparatus only when the closure part (103) is removed from the parked position (103b).

22. Filter apparatus according to any of claims 15 to 21,
characterised in that,
the closure part (103) has a blocking part (its forward end) which when the closure part (103) is not located in its closure end position urges the door (21) of the housing (2) thereagainst and closing is hindered.

## Revendications

1. Installation de filtration (1) pour un milieu gazeux comportant
- une carrosserie (2)
- un boîtier de filtre (23) qui est disposé dans la carrosserie (2) et à l'intérieur duquel un filtre (7) est disposé sur un trajet d'écoulement du milieu gazeux
- et une cuve de collecte (8) pour le produit de filtration disposée en-dessous du filtre (7),
le tronçon de sortie du filtre (7) étant éloigné de la cuve de collecte (8) caractérisé par le fait
que le boîtier de filtre comprend une partie supérieure et une partie inférieure,
que la cuve de collecte (8) est disposée dans la carrosserie (2) en tant qu'élément séparé,
que la cuve de collecte est formée par la partie inférieure du boîtier de filtre (23) et peut être couplée de manière séparable à la partie supérieure du boîtier de filtre (23) au moyen d'un dispositif de couplage (81) et
que la cuve de collecte peut être retirée par une ouverture (19) latérale dans la carrosserie (2).

2. Installation de filtration selon la revendication 1, caractérisée par le fait qu'un récipient intérieur, de préférence qui peut être fermé, notamment se présentant sous la forme d'une poche (92) en un matériau en feuille, est associé à la cuve de collecte (8).

3. Installation de filtration selon la revendication 2, caractérisée par le fait qu'il est prévu un équilibrage de la pression entre l'intérieur et l'extérieur du récipient intérieur (92).

4. Installation de filtration selon l'une des revendications 2 à 3, caractérisée par le fait que le récipient intérieur (92) est tenu par serrage, notamment de la région de son bord, entre la cuve de collecte (8) et le boîtier de filtre (23).

5. Installation de filtration selon l'une des revendications 2 à 4, caractérisée par le fait que la cuve de collecte (8) présente un bord (77) intérieur de serrage et un bord (78) extérieur d'étanchéité, de préférence une gorge (93) destinée à recevoir une partie de bord du récipient intérieur (92) étant prévue entre ceux-ci.

6. Installation de filtration selon la revendication 5, caractérisée par le fait qu'il est prévu dans le bord (77) intérieur de serrage au moins une, de préférence plusieurs ouvertures (94) qui sont réparties sur le pourtour.

7. Installation de filtration selon l'une des revendications précédentes, caractérisée par le fait que le dispositif de couplage (81) présente, des deux côtés de la cuve de collecte (8), des éléments presseurs (82) qui agissent sur celle-ci et à l'aide desquels la cuve de collecte (8) peut être pressée vers le haut contre le boîtier de filtre (23), de préférence à l'aide d'un système de leviers (85), le système de leviers (85) pouvant notamment être actionné manuellement et étant accessible par le devant.

8. Installation de filtration selon l'une des revendications précédentes, caractérisée par le fait que le filtre (28) est accessible, notamment par le devant, par une ouverture dans la carrosserie (2) qui peut être fermée.

9. Installation de filtration selon l'une des revendications précédentes, caractérisée par le fait que l'ouverture (19) dans la carrosserie (2), qui donne accès à la cuve de collecte (8) et au filtre (28), est de préférence une ouverture commune et peut être fermée, notamment, par une porte (21) commune.

10. Installation de filtration selon l'une des revendications précédentes, caractérisée par le fait que le boîtier de filtre (23) est monté sur des amortisseurs de vibrations ou est monté flottant dans la carrosserie (2).

11. Installation de filtration selon l'une des revendications précédentes, caractérisée par le fait qu'un ventilateur (5) spécifique, qui génère le flux d'air d'aspiration nécessaire, est associé à l'installation, lequel ventilateur, de préférence, est disposé dans la carrosserie (2), notamment dans la région inférieure de celle-ci.

12. Installation de filtration selon la revendication 11, caractérisée par le fait qu'un indicateur de niveau de remplissage (102) est associé à la cuve de collecte (8), lequel indicateur de niveau, lorsque la cuve de collecte (8) est pleine, délivre un signal à un dispositif (13) électrique de commande qui active une alarme ou coupe le ventilateur (5).

13. Installation de filtration selon l'une des revendications précédentes, caractérisée par le fait qu'elle est agencée avec des compartiments principaux (5, 7, 8, 13, 14) disposés les uns aux dessus des autres en une colonne parallélépipédique.

14. Installation de filtration selon la revendication 13, caractérisée par le fait que les compartiments principaux (5, 7, 8, 13, 14) sont la cuve de collecte (8), le filtre (7) placé au-dessus de celle-ci, un dispositif d'aspiration (5), disposé notamment sous la cuve de collecte (8), et un dispositif de commande (13), disposé notamment au-dessus du filtre (7).

15. Installation de filtration selon l'une des revendications précédentes, caractérisée par le fait que le dispositif (81) de raccordement et de couplage pour coupler de manière étanche la cuve de collecte (8) formant une partie inférieure du boîtier de filtre (23) est prévu sur la partie supérieure du boîtier de filtre (23) et que la partie (25) supérieure du boîtier de filtre (23), dans la région de son ouverture, peut être fermée par un élément d'obturation (103).

16. Installation de filtration selon la revendication 15, caractérisée par le fait que l'élément d'obturation est accessible par l'ouverture (19) de la carrosserie (2) et est monté coulissant dans un dispositif de support ou une glissière sur la carrosserie (2, 23).

17. Installation de filtration selon la revendication 15 ou 16, caractérisée par le fait que l'élément d'obturation est un tiroir (103), de préférence plan.

18. Installation de filtration selon l'une des revendications 15 à 17, caractérisée par le fait que l'élément d'obturation peut être glissé et retiré entre la partie supérieure (25) de boîtier et la cuve (8), de préférence abaissée.

19. Installation de filtration selon l'une des revendications 15 à 18, caractérisée par le fait qu'il est prévu un dispositif de sécurité qui, lorsque l'élément d'obturation (103) n'est pas dans sa position de fermeture (103a), produit un signal d'avertissement acoustique ou optique ou empêche la mise en service de l'installation de filtration (1) ou bloque ou interdit la libération ou l'enlèvement de la cuve de collecte (8).

20. Installation de filtration selon l'une des revendications 15 à 19, caractérisée par le fait qu'un emplacement (103b) de rangement pour l'élément d'obturation (103) est agencé sur le trajet vertical d'ouverture de la cuve de collecte (8) de telle sorte que l'élément d'obturation (103) placé dans son emplacement de rangement (103b) bloque la cuve de collecte (8) ou le dispositif (81) de raccordement et de couplage ou un élément lié à celui-ci et empêche l'ouverture.

21. Installation de filtration selon la revendication 20, caractérisée par le fait qu'il est prévu un dispositif de sécurité qui autorise le raccordement de la cuve de collecte (8) et/ou une mise en service de l'installation de filtration seulement lorsque l'élément d'obturation (103) n'est pas dans son emplacement de rangement (103b).

22. Installation de filtration selon l'une des revendications 15 à 21, caractérisée par le fait que l'élément d'obturation (103) comporte une partie de blocage (son extrémité antérieure) qui, lorsque l'élément d'obturation n'est pas dans sa position extrême de fermeture, bute contre la porte (21) de la carrosserie (2) et empêche sa fermeture.
